# EUROPÄISCHE PATENTSCHRIFT

(11) **EP 1 099 766 B1**
(45) Veröffentlichungstag und Bekanntmachung des Hinweises auf die Patenterteilung: **11.06.2003**
(21) Anmeldenummer: 99122123.5
(22) Anmeldetag: 05.11.1999
(51) Int. Cl.: C13F 1/00, C13G 1/00

(54) **Verdampfer**
Evaporator
Evaporateur

(43) Veröffentlichungstag der Anmeldung: 16.05.2001
(73) Patentinhaber: Balcke-Dürr Energietechnik GmbH, 40882 Ratingen (DE)
(72) Erfinder: Niepoth, Klaus Dipl.-Ing., 47495 Rheinberg (DE); Morgenroth, Boris, 42489 Wülfrath (DE)
(74) Vertreter: Stenger, Watzke & Ring Patentanwälte

(56) Entgegenhaltungen:
- EP-A- 0 729 772
- WO-A-93/02964
- WO-A-98/16684
- DE-A- 3 941 278
- DE-C- 19 729 515
- FR-A- 2 561 123
- US-A- 4 278 495
- US-A- 5 259 928

## Beschreibung

Die Erfindung betrifft einen insbesondere für die Zuckerindustrie bestimmten Verdampfer mit mindestens einem Plattenwärmetauscher, der in einem Gehäuse mit allseitigem Abstand zu den Gehäusewänden angeordnet ist, wobei das einzudickende Medium durch eine oberhalb des Wärmetauschers angeordnete Medienverteilung aufgegeben wird, den Plattenwärmetauscher aufgrund der Schwerkraft von oben nach unten durchströmt und aus dem unteren Ende gemeinsam mit Brüden austritt, die in einem unteren Brüdenraum vom eingedickten Medium getrennt und durch Brüdenkanäle einem oberen Brüdenraum zugeführt werden, aus dem sie abgezogen werden.

Derartige Verdampfer sind bekannt. **Aufgabe** der Erfindung ist es, eine wirksame Abscheidung von in den abgetrennten Brüden enthaltenen Tropfen des eingedickten Mediums zu erzielen.

Die **Lösung** dieser Aufgabenstellung durch die Erfindung besteht darin, daß die zwischen der Wand des Behälters und der geschlossenen Wand des Plattenwärmetauschers ausgebildeten, durch Trennwände gegenüber dem restlichen Innenraum des Behälters abgetrennten Brüdenkanäle mit Tropfenabscheidern ausgestattet sind und daß in jedem Brüdenkanal mehrere Tropfenabscheider in Strömungsrichtung übereinander angeordnet sind.

Bei dem erfindungsgemäßen Verdampfer, dessen Plattenwärmetauscher im Kreuzstrom mit Dampf beheizt wird, sind die unterhalb und oberhalb des Wärmetauschers über den gesamten Querschnitt des Behälters reichenden Brüdenräume durch Brüdenkanäle miteinander verbunden, die zwischen der Wand des Behälters und der geschlossenen Wand des Plattenwärmetauschers verlaufen und durch Trennwände gegenüber dem restlichen Innenraum des Behälters abgetrennt sind. In diesen Brüdenkanälen sind Tropfenabscheider angeordnet, durch die mit dem Brüden mitgerissene Flüssigkeitströpfchen aus der Dampfphase entfernt werden und somit eine entsprechende Reinheit des Brüdens sicherstellen. Da wegen des geringeren Strömungsquerschnittes der Brüdenkanäle die Strömungsgeschwindigkeit hoch ist und die Tropfenabscheider auf dem gesamten Querschnitt angeordnet sind, ergibt sich eine wirksame Abscheidung.

Die Tropfenabscheider können im Bereich des Eintritts, des Austritts und/oder im Verlauf der Brüdenkanäle angeordnet sein.

Gemäß einem weiteren Merkmal der Erfindung können die im Bereich des Austritts angeordneten Tropfenabscheider mit in der Medienverteilung endenden Medienableitungen versehen sein. Die im Bereich des Eintritts angeordneten Tropfenabscheider werden vorzugsweise mit in der Auffangwanne mündenden Medienableitungen versehen.

Die Tropfenabscheider können waagerecht oder geneigt ausgebildet werden. Bei einer bevorzugten Ausführung werden Lamellentropfenfänger als Tropfenabscheider eingesetzt.

Auf der Zeichnung ist ein Ausführungsbeispiel des erfindungsgemäßen Verdampfers dargestellt, und zwar zeigt:
- Fig. 1: einen Längsschnitt durch den Wärmeübertrager,
- Fig. 2: einen Querschnitt gemäß der Schnittlinie 11-11 in Fig. 1 und
- Fig. 3: einen weiteren Längsschnitt gemäß der Schnittlinie III-III in Fig. 1.

Der Verdampfer besteht aus einem zylindrischen Gehäuse 1, das am oberen Ende mit einem Brüdenaustritt und am unteren Ende mit einem Austritt 3 für das eingedickte Medium M versehen ist. Im Gehäuse 1 ist unter Freilassung eines allseitigen Ringraumes ein Plattenwärmetauscher 4 angeordnet, der aus Plattenelementen besteht, die im Kreuzstrom durchströmt werden.

Das mittels eines seitlichen Eintrittsstutzens 5 einer Medienverteilung 6 aufgegebene Medium M durchströmt aufgrund der Schwerkraft die von den Plattenelementen gebildeten senkrechten Kanäle des Plattenwärmetauschers 4 und tritt am unteren Ende gemeinsam mit den entstehenden Brüden in einen unteren Brüdenraum 7 aus. Der zur Beheizung des Plattenwärmetauschers 4 bestimmte Dampf D tritt durch einen seitlichen Dampfeintrittsstutzen 8 in den Dampfraum 9 ein. Dieser Dampfraum 9 wird durch die Außenwand des Gehäuses 1 und die mit den waagerechten Eintrittskanälen versehene Wand des Plattenwärmetauschers 4 gebildet, wobei Trennwände 10 vorgesehen sind, durch die der Dampfraum 9 vom restlichen Inneren des Behälters 1 abgedichtet ist. An der Oberseite ist ein kreisabschnittförmiges Blech 11 vorgesehen, durch das der Dampfraum 9 vom oberen Brüdenraum 12 abgetrennt wird. Ein gleichartiges Blech 13 schließt den Dampfraum 9 an der Unterseite ab.

Der eintretende Dampf D durchströmt etwa zwei Drittel der waagerechten Strömungskanäle des Plattenwärmetauschers 4 und gelangt sodann in eine Wendekammer 14, die - ebenso wie der Dampfraum 9 - durch kreisabschnittsförmige Bleche 15 und 16 vom übrigen Inneren des Behälters 1 abgetrennt ist. Der aus dem Plattenwärmetauscher 4 austretende Dampf wird in der Wendekammer 14 umgelenkt und gelangt schließlich in den unteren Teil des Plattenwärmetauschers 4. Hier kondensiert der Dampf D; das Kondensat K wird aus dem Kondensatraum 17 abgezogen, der durch ein dem Blech 13 entsprechendes Blech 18 vom unteren Brüdenraum 7 getrennt ist.

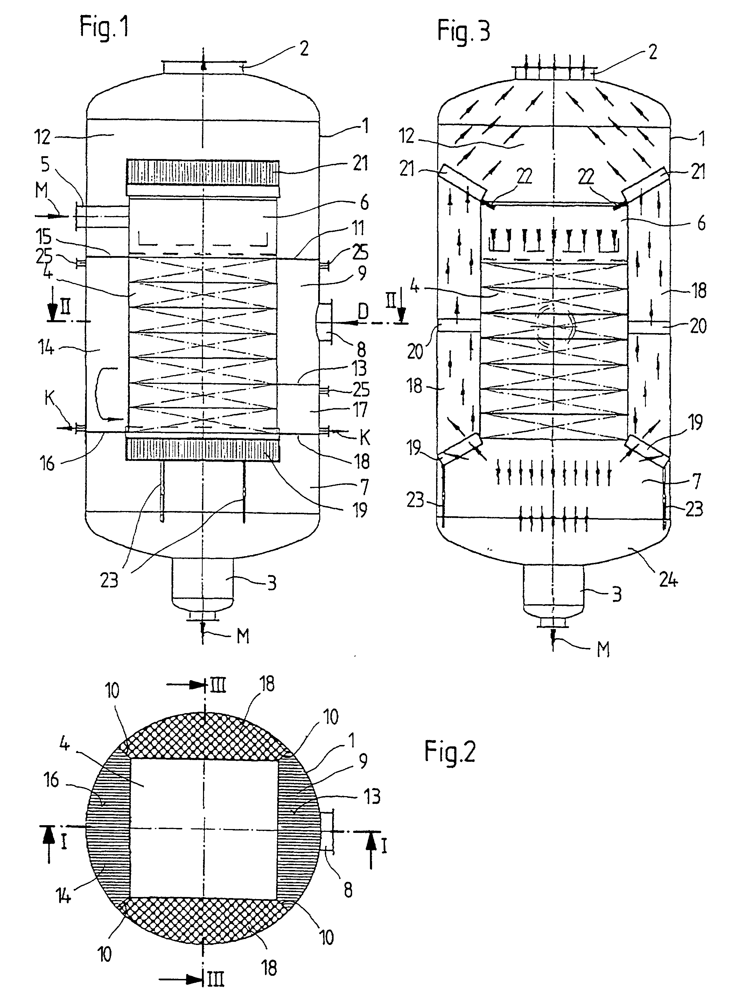

Wie aus Fig. 2 und 3 hervorgeht, sind der untere Brüdenraum 7 und der obere Brüdenraum 12 durch Brüdenkanäle 18 verbunden. Jeder Brüdenkanal 18 wird durch einen Teil der Außenwand des Gehäuses 1 und der geschlossenen Wand des Plattenwärmetauschers 4 gebildet, wobei der Abschluß der Brüdenkanäle 18 gegenüber dem Dampfraum 9 bzw. Kondensatraum 17 und der Wendekammer 14 durch die Trennwände 10 erfolgt.

Im Bereich dieser Brüdenkanäle 18 sind Tropfenabscheider 19, 20 und 21 angeordnet, die im Brüden mitgerissene Flüssigkeitstropfen aus dem Brüden entfernen. Da diese Tropfenabscheider 19, 20, 21 im Bereich des verringerten Strömungsquerschnittes der Brüdenkanäle 18 angeordnet sind, haben sie eine besonders gute Wirkung.

Bei dem dargestellten Ausführungsbeispiel sind die Tropfenabscheider 20 in der Längsmitte der Brüdenkanäle 18 angeordnet und waagerecht ausgerichtet. Sie können auch geneigt angeordnet sein, um die Strömungsfläche zu vergrößern. Eine derartige Ausführung ist hinsichtlich der Tropfenabscheider 19 und 21 gezeichnet, die im Bereich des Eintritts bzw. des Austritts des Brüdenkanals 18 angeordnet sind.

Die Anzahl und Lage der Tropfenabscheider im Verlauf der Brüdenkanäle 18 hängt vom jeweiligen Einsatzfall ab. Es werden mehrere Tropfenabscheider pro Brüdenkanal 18 in Strömungsrichtung übereinander angeordnet. Vorzugsweise werden die Tropfenabscheider als Lamellentropfenfänger ausgebildet.

Wie das Ausführungsbeispiel der im Austrittsbereich der Brüdenkanäle 18 angeordneten Tropfenabscheider 21 zeigt, können diese Tropfenabscheider 21 mit in der Medienverteilung endenden Medienableitungen 22 versehen sein. Das in den Tropfenabscheidern 21 abgeschiedene Medium gelangt auf diese Weise erneut in den Plattenwärmetauscher 4.

Bei den im Eintritt der Brüdenkanäle 18 angeordneten Tropfenabscheidern 19 münden die Medienableitungen 23 in der Auffangwanne 24 des Gehäuses 1, so daß das in diesen Tropfenabscheidern 19 abgeschiedene Medium sofort dem Austritt 3 zugeführt wird.

Wie die Darstellung in Fig. 1 erkennen läßt, ist auch im Bereich der Wendekammer 14 ein Stutzen zur Abführung von Kondensat vorgesehen. Dampfraum 9, Wendekammer 14 und Kondensatraum 17 sind zusätzlich mit Inertgasstutzen 25 versehen, so daß in diesen Bereichen anfallende Gase abgezogen werden können.

### Bezugszeichenliste

- 1: Gehäuse
- 2: Brüdenaustritt
- 3: Austritt
- 4: Plattenwärmetauscher
- 5: Eintrittsstutzen
- 6: Medienverteilung
- 7: Brüdenraum, unterer
- 8: Dampfeintrittsstutzen
- 9: Dampfraum
- 10: Trennwand
- 11: Blech
- 12: Brüdenraum, oberer
- 13: Blech
- 14: Wendekammer
- 15: Blech
- 16: Blech
- 17: Kondensatraum
- 18: Brüdenkanal
- 19: Tropfenabscheider
- 20: Tropfenabscheider
- 21: Tropfenabscheider
- 22: Medienableitung
- 23: Medienableitung
- 24: Auffangwanne
- 25: Inertgasstutzen

- D: Dampf
- M: Medium
- K: Kondensat

## Patentansprüche

1. Verdampfer, insbesondere für die Zuckerindustrie, mit mindestens einem Plattenwärmetauscher (4), der in einem Gehäuse (1) mit allseitigem Abstand zu den Gehäusewänden angeordnet ist, wobei das einzudickende Medium (M) durch eine oberhalb des Wärmetauschers (4) angeordnete Medienverteilung (6) aufgegeben wird, den Plattenwärmetauscher (4) aufgrund der Schwerkraft von oben nach unten durchströmt und aus dem unteren Ende gemeinsam mit Brüden austritt, die in einem unteren Brüdenraum (7) vom eingedickten Medium (M) getrennt und durch Brüdenkanäle (18) einem oberen Brüdenraum (12) zugeführt werden, aus dem sie abgezogen werden,
**dadurch gekennzeichnet,**
**daß** die zwischen der Wand des Behälters (1) und der geschlossenen Wand des Plattenwärmetauschers (4) ausgebildeten, durch Trennwände (10) gegenüber dem restlichen Innenraum des Behälters (1) abgetrennten Brüdenkanäle (18) mit Tropfenabscheidern (19, 20, 21) ausgestattet sind und
**daß** in jedem Brüdenkanal (18) mehrere Tropfenabscheider (19, 20, 21) in Strömungsrichtung übereinander angeordnet sind.

2. Verdampfer nach Anspruch 1, **dadurch gekennzeichnet, daß** die Tropfenabscheider (19) im Bereich des Eintritts der Brüdenkanäle (18) angeordnet sind.

3. Verdampfer nach Anspruch 1 oder 2, **dadurch gekennzeichnet, daß** die Tropfenabscheider (21) im Bereich des Austritts der Brüdenkanäle (18) angeordnet sind.

4. Verdampfer nach mindestens einem der Ansprüche 1 bis 3, **dadurch gekennzeichnet, daß** die im Bereich des Austritts angeordneten Tropfenabscheider (21) mit in der Medienverteilung (6) endenden Medienableitungen (22) versehen sind.

5. Verdampfer nach mindestens einem der Ansprüche 1 bis 3, **dadurch gekennzeichnet, daß** die im Bereich des Eintritts angeordneten Tropfenabscheider (19) mit in der Auffangwanne (24) mündenden Medienableitungen (23) versehen sind.

6. Verdampfer nach mindestens einem der Ansprüche 1 bis 5, **dadurch gekennzeichnet, daß** die Tropfenabscheider waagerecht oder schräg angeordnet sind.

7. Verdampfer nach mindestens einem der Ansprüche 1 bis 6, **dadurch gekennzeichnet, daß** die Tropfenabscheider als Lamellentropfenfänger ausgebildet sind.

## Claims

1. Evaporator, in particular for the sugar industry, with at least one plate-type heat exchanger (4), which is disposed in a housing (1) at an all-round spacing from the housing walls, wherein the medium (M) which is to be thickened is delivered by a media distribution unit (6) disposed above the heat exchanger (4), flows through the plate-type heat exchanger (4) from top to bottom on account of gravity and emerges from the bottom end together with vapour, which is separated in a bottom vapour chamber (7) from the thickened medium (M) and fed through vapour channels (18) to a top vapour chamber (12), from which it is drawn off, **characterised in that** the vapour channels (18), which are formed between the wall of the container (1) and the closed wall of the plate-type heat exchanger (4) and are separated from the rest of the interior space of the container (1) by partition walls (10), are provided with mist eliminators (19, 20, 21), and that a plurality of mist eliminators (19, 20, 21) are disposed one above the other in the direction of flow in each vapour channel (18).

2. Evaporator according to Claim 1, **characterised in that** the mist eliminators (19) are disposed in the region of the entrance of the vapour channels (18).

3. Evaporator according to Claim 1 or 2, **characterised in that** the mist eliminators (21) are disposed in the region of the exit of the vapour channels (18).

4. Evaporator according to at least one of Claims 1 to 3, **characterised in that** the mist eliminators (21) disposed in the region of the exit are provided with media drains (22) ending in the media distribution unit (6).

5. Evaporator according to at least one of Claims 1 to 3, **characterised in that** the mist eliminators (19) disposed in the region of the entrance are provided with media drains (23) opening out in the collecting tank (24).

6. Evaporator according to at least one of Claims 1 to 5, **characterised in that** the mist eliminators are disposed horizontally or at a slant.

7. Evaporator according to at least one of Claims 1 to 6, **characterised in that** the mist eliminators are formed as lamellar mist collectors.

## Revendications

1. Evaporateur, en particulier pour les industries du sucre, avec au moins un échangeur de chaleur à plaques (4), qui est disposé dans un boîtier (1) écarté de tous les côtés des parois du boîtier, le milieu à épaissir (M) étant amené par une distribution du milieu (6) disposée au-dessus de l'échangeur de chaleur (4), traversant l'échangeur de chaleur à plaques (4) de haut en bas par suite de la force de la pesanteur et sortant ensemble avec des buées de l'extrémité inférieure, ces dernières étant séparées du milieu épaissi (M) dans un compartiment inférieur des buées (7) et étant acheminées par des canaux des buées (18) dans un compartiment supérieur des buées (12), d'où elles sont évacuées,
**caractérisé en ce que**
les canaux des buées (18) formés entre la paroi du boîtier (1) et la paroi fermée de l'échangeur de chaleur à plaques (4), séparés par des cloisons (10) du reste de l'espace intérieur du boîtier (1) sont dotés de séparateurs de gouttes (19, 20, 21), et **en ce que** dans chaque canal des buées (18), plusieurs séparateurs de gouttes (19, 20, 21) sont disposés les uns au-dessus des autres dans la direction de l'écoulement.

2. Evaporateur selon la revendication 1, **caractérisé en ce que** les séparateurs de gouttes (19) sont disposés dans la zone de l'entrée des canaux des buées (18).

3. Evaporateur selon la revendication 1 ou 2, **caractérisé en ce que** les séparateurs de gouttes (21) sont disposés dans la zone de la sortie des canaux des buées (18).

4. Evaporateur selon au moins l'une des revendications 1 à 3, **caractérisé en ce que** les séparateurs de gouttes (21) disposés dans la zone de la sortie sont dotés de déflecteurs de milieu (22) se terminant dans la distribution du milieu (6).

5. Evaporateur selon au moins l'une des revendications 1 à 3, **caractérisé en ce que** les séparateurs de gouttes (19) disposés dans la zone de l'entrée sont dotés de déflecteurs de milieu (23) débouchant dans le bac de récupération (24).

6. Evaporateur selon au moins l'une des revendications 1 à 5, **caractérisé en ce que** les séparateurs de gouttes sont disposés horizontalement ou obliquement.

7. Evaporateur selon au moins l'une des revendications 1 à 6, **caractérisé en ce que** les séparateurs de gouttes sont configurés comme pièges à gouttes à lamelles.
